# EUROPEAN PATENT APPLICATION

(11) **EP 1 980 491 A1**
(43) Date of publication of application: **15.10.2008**
(21) Application number: 07106187.3
(22) Date of filing: 13.04.2007
(51) Int. Cl.: B64G 1/42

(54) **System and methods for power generation for spacecraft electronics**

(71) Applicant: Honeywell International Inc., Morristown NJ 07962 (US)
(72) Inventor: Samson, John R., Jr., Palm Harbor, FL34683 (US)
(74) Representative: Haley, Stephen

(57) **Abstract**

System and methods for power generation for spacecraft electronics are provided. In one embodiment, a method for generating electric power is provided. The method comprises capturing thermal energy from a first thermally conducting surface of a spacecraft (140); converting the captured thermal energy into an electric current; and providing a charging current to a battery (120) based on the electric current.

## Description

Supplying power to electronics aboard a spacecraft is a two-fold problem due to both limited onboard power generation capability, and a limited capability to dissipate heat generated by electronics and other on-board processes. Power for onboard electronics is typically generated by a combination of solar arrays and onboard system batteries. The onboard batteries are needed when the spacecraft either is in a shadow, prohibiting sunlight from reaching the solar arrays, or is at a great distance from the sun. At great distances from the sun, the amount of solar energy that can be captured by a solar array is limited because of solar radiation loss. Additionally, the size of both the solar array and the system batteries are limited due to launch constraints (most significantly the total weight of the launch vehicle) and other mechanical limitations of the spacecraft. Limiting the size of a solar array limits the amount of solar energy which may be captured by the array, and thus limits the power generating capacity of the array. An auxiliary use for the power from solar arrays to charge the spacecraft's system batteries when energy from the sun is available. However, as the complexity of tasks carried out in space become more sophisticated, the need arises for powering more electronics than necessary in the past, thus straining the capacity of current on-board power systems.

For the reasons stated above and for other reasons stated below which will become apparent to those skilled in the art upon reading and understanding the specification, there is a need in the art for improved system and methods for power generation for spacecraft electronics.

The Embodiments of the present invention provide methods and systems for power generation for spacecraft electronics and will be understood by reading and studying the following specification.

In one embodiment, a power system for a spacecraft is provided. The system comprises a battery; a power distribution system coupled to the battery and adapted to distribute electric power from the battery to at least on electronic device; one or more thermal collectors adapted to receive thermal energy dissipated by the at least one electronic device; at least one thermal to electric energy converter coupled to the one or more thermal collectors and adapted to convert thermal energy received by the one or more thermal collectors into an electric current; and a battery charging circuit coupled to the at least one thermal to electric conversion system and adapted to charge the battery based on the electric current.

In another embodiment, a method for generating electric power is provided. The method comprises capturing thermal energy from a first thermally conducting surface of a spacecraft; converting the captured thermal energy into an electric current; and providing a charging current to a battery based on the electric current.

In yet another embodiment, a power system for a spacecraft is provided. The system comprises means for capturing thermal energy from a first thermally conducting surface; means for converting the captured thermal energy into an electric current, the means for converting responsive to the means for capturing; and means for charging a battery based on the electric current, the means for charging responsive to the means for capturing.

Embodiments of the present invention can be more easily understood and further advantages and uses thereof more readily apparent, when considered in view of the description of the embodiments and the following figures in which:
Figure 1 is a block diagram illustrating a spacecraft power system of one embodiment of the present invention;
Figures 2A and 2B are block diagrams illustrating thermal energy collection and conversion of one embodiment of the present invention; and
Figure 3 is a method for generating electric power aboard a spacecraft of one embodiment of the present invention.

In accordance with common practice, the various described features are not drawn to scale but are drawn to emphasize features relevant to the present invention. Reference characters denote like elements throughout figures and text.

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

To a large extent, the power dissipated by spacecraft electronics is wasted. Power dissipated from electronics in the form of heat is captured by spacecraft thermal management systems, and radiated to the coldness of deep space via a thermal cold plate or other similar mechanism. Embodiments of the present invention provide systems and methods to capture this otherwise wasted thermal energy and convert it into electrical energy which, in one embodiment, is used to charge spacecraft batteries. Providing this additional source of power not only increases the capacity of a spacecrafts power system to operate additional electronics in support of missions, but can reduce the dependency of the power system on the solar arrays and batteries. Reductions in the size of spacecraft solar arrays and batteries, corresponding to the additional power generated by embodiments of the present invention, would result in overall reductions in a spacecraft's weight and size. Further, embodiments of the present invention increase the capability of spacecraft on deep space missions, where the availability of solar energy is limited.

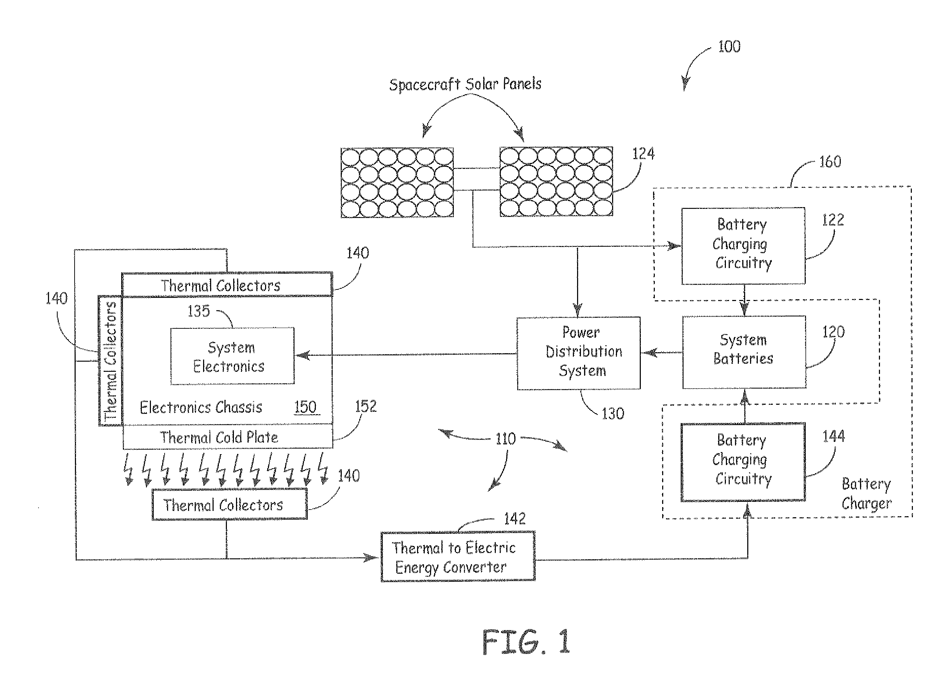

Figure 1 illustrates a spacecraft power system 100 having a thermal energy recovery system (shown generally at 110) of one embodiment of the present invention. In the embodiment shown in Figure 1, the thermal energy recovery system 100 is utilized for charging spacecraft batteries 120. In other embodiment, thermal energy recovery system 110 may be used to power small electronics.

In one embodiment, spacecraft power system 100 first comprises spacecraft batteries 120, a power distribution system 130 coupled to draw electric power from system batteries 120, a battery charger 122 coupled to system batteries 120, and a solar array 124 coupled to battery charging circuitry 122. In one embodiment, in operation, system electronics 135 receive electric power from power distribution system 130. Power distribution system 130, in turn, receives electric power to distribute to system electronics 135 from spacecraft batteries 120. In order to maintain the voltage of spacecraft batteries 120 at sufficient levels to operate system electronics 135, battery charging circuit 122 provides an electric charging current to spacecraft batteries 120, using electrical power generated by solar array 124.

Thermal energy recovery system 110 increases the overall power generating capacity of spacecraft power system 100 by increasing the overall charging current available to keep spacecraft batteries 120 charged to their rated capacity. The increase in overall charging current increases the capacity and duration of spacecraft batteries 120 to provide current to system electronics 135 at the rated voltages that system electronics 135 require to operate.

In one embodiment, thermal energy recovery system 110 comprises a plurality of thermal collectors 140, a thermal to electric energy converter 142, and a battery charging circuit 144. In one embodiment, in operation, thermal collectors 140 collect dissipated thermal energy from the spacecraft and pass it to thermal to electric energy converter 142. Thermal to electric energy converter 142 generates an electrical current from thermal energy collected by thermal collectors 140, which is converted into a battery charging current by battery charging circuit 144. Battery charging circuit 144 provides the battery charging current to spacecraft batteries 120, using electrical current generated by thermal to electric energy converter 142. In one embodiment, a single battery charger 160 includes the functionality required to realize both battery charging circuit 122 and battery charging circuit 144.

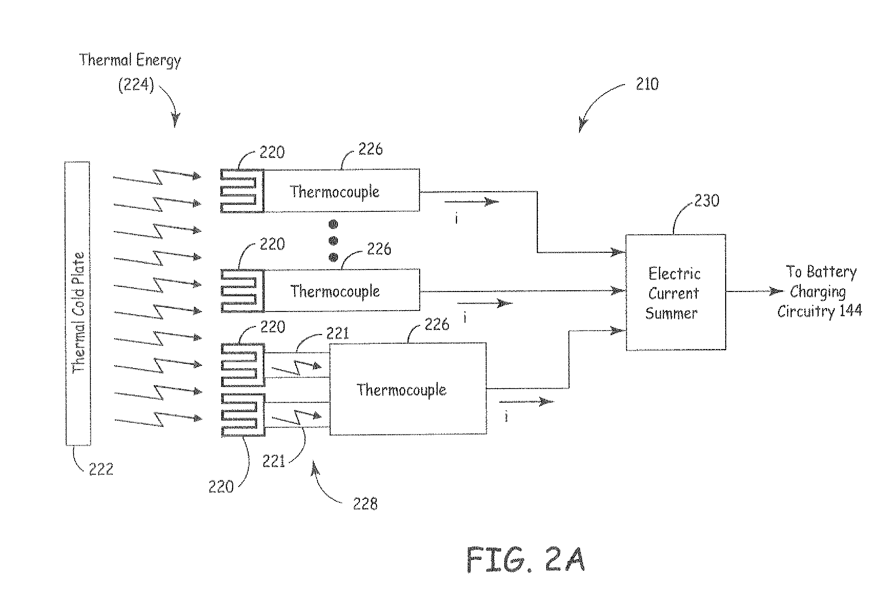

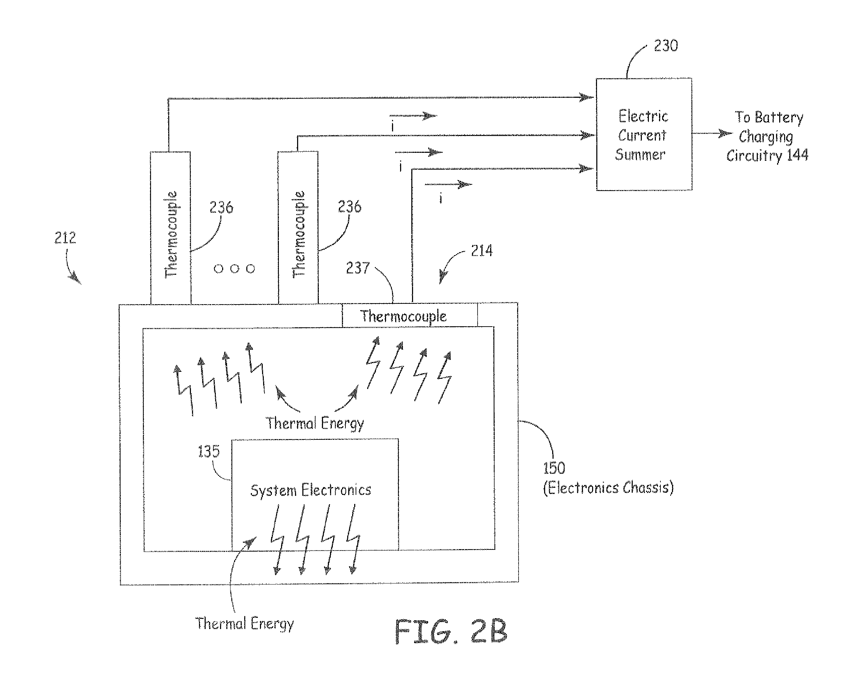

Thermal collectors 140 may comprise one or more of thermal radiation collectors (as illustrated generally at 210 in Figure 2A), surface thermal collectors (as illustrated generally at 212 in Figure 2B) and embedded thermal collectors (as illustrated generally at 214 in Figure 2B), each of which is discussed in further detail below. One mechanism for converting thermal energy to electrical energy is the thermocouple. In one embodiment, a thermocouple device comprises two dissimilar metals joined at their ends. In one embodiment, a thermocouple device comprises a p-type semiconductor and an n-type semiconductor joined together. Heating of the joined ends causes a current to flow which, in a traditional application, is detected and used to determine temperature, but the current generated could also be used to provide a trickle charge for spacecraft batteries. Thus, in one embodiment, thermal to electric conversion system 142 includes one or more thermocouple devices. Although Figures 2A and 2B illustrate the used of thermocouple devices to generate electric current from thermal energy, embodiments of the present invention are not limited to the use of thermocouple devices but include any means for converting thermal power into electric power.

As illustrated in Figure 2A, thermal radiation collectors 220 receive heat energy radiated by some structure within the spacecraft (illustrated at 224), such as, but not limited to, a thermal cold plate 222, or other components of the spacecraft's thermal management system. In one embodiment, thermal radiation collectors 220 include finned heat sinks that are directly warmed by heat radiated from the spacecraft's thermal management system. In one embodiment, heat captured by the thermal radiation collectors 220 is conductively carried to one or more thermocouple devices 226 which convert the thermal energy they receive into electric current. In one embodiment, heat from two or more thermal radiation collectors 220 is conductively carried to a single thermocouple device 226 by thermal conduits 221, as illustrated generally at 228. In one embodiment, the electric current output from thermocouple devices 226 are combined by current combiner 230 and the summed output provided to battery charging circuitry 114. Although the embodiment shown in Figure 2A utilizes thermocouples to generate electric current from radiated thermal energy, other embodiments may use other means. For example, in another embodiment, radiation detectors such as infrared based detectors are used to generate electric current from radiated thermal energy.

As illustrated in Figure 2B at 212, in one embodiment, thermal energy is conductively collected directly from the surface of spacecraft structures, such as an electronics chassis 150 that houses system electronics 135. Thermal energy dissipated by system electronics 135 is, through one or both of radiation and conduction, transferred to electronics chassis 150. In one embodiment, one or more thermocouple devices 236 are placed in contact with system electronics 135 such that heat transferred to electronics chassis 150 is conductively transferred to thermocouple devices 236, which convert the thermal energy they receive into electric current. In one embodiment, one or more thermocouple devices 237 are embedded within a spacecraft structures, such as an electronics chassis 150, as shown generally at 214. In such an embodiment, the embedded thermocouple devices 237 conductively receive the heat received by electronics chassis 150 and convert the thermal energy they receive into electric current. In one embodiment, the electric current output from thermocouple devices 236 and 237 are combined by current combiner 230 and the summed output provided to battery charging circuitry 114. In such embodiments such as those shown in Figure 2B, the of spacecraft structures in which the thermocouple devices are surface mounted or embedded, act as the thermal collector 140 which conducts thermal energy to the thermocouple devices.

As would be appreciated by one skilled in the art upon reading this specification, spacecraft thermal design and management is a very delicate process. To maintain internal temperatures at desired levels, thermal energy generated by a spacecraft is usually dissipated to the coldness of deep space via a thermal cold plate or other mechanism. In positioning thermal collectors 140, it is necessary not to adversely affect the thermal flow of the spacecraft. This is particularly true of capturing and recovering radiated energy as illustrated in Figure 2A. The design of thermal management systems for dissipating radiated energy is typically governed by a design criteria known to those skilled in the art as the "view factor". Having a relatively high view factor means that the spacecraft surface radiating heat has a relatively unobstructed thermal view of open space, allowing heat radiated from the surface to dissipate out into space instead of warming another section of the spacecraft within its "view". A surface with a relatively low view factor will have one or more objects that block their view of open space. Instead of radiating heat into open space, a spacecraft surface with a relatively low view factor will have the heat they radiate at least partially re-absorbed by some part of the spacecraft, thus reducing the overall efficiency of the surface for dissipating heat.

Embodiments of the present invention take advantage of view factors related to various surfaces of the spacecraft by locating thermal collectors 140 on (or in the thermal view of) surfaces having relatively low view factors. Locating thermal collectors 140 to collect thermal energy from low view factor surfaces allows the collectors to utilize thermal energy that was not effectively dissipated into space by a spacecraft's thermal management system.

For example, in one embodiment, a thermal cold plate is located on only one side (for example, the bottom) of an electronics chassis that houses system electronics, such as those depicted in Figure 1. The spacecraft's thermal management system is designed to remove thermal energy from the electronic boards through one side of the electronics chassis and out of the spacecraft through the thermal cold plate. Therefore, the side of the electronics chassis directly coupled to the thermal cold plate has a relatively higher thermal view factor when compared to the remaining top and sides of the electronic chassis, which may have a relatively obstructed thermal view because they radiate to other surfaces of the spacecraft, for example. Thus, this establishes the top and sides of the electronics chassis as preferred surfaces for capturing thermal energy for conversion to electric power as described above.

As another example, in one embodiment, a spacecraft is designed to radiate energy to open space through the use of cooling fins mounted to the exterior of the spacecraft. In that case thermal collectors 140 for recapturing radiated energy from the fins would have to be situated so that they do not block the cooling fins' view of open space, but instead placed so that they receive radiated thermal energy from a surface of the cooling fins with a thermal view already obstructed by another spacecraft structure.

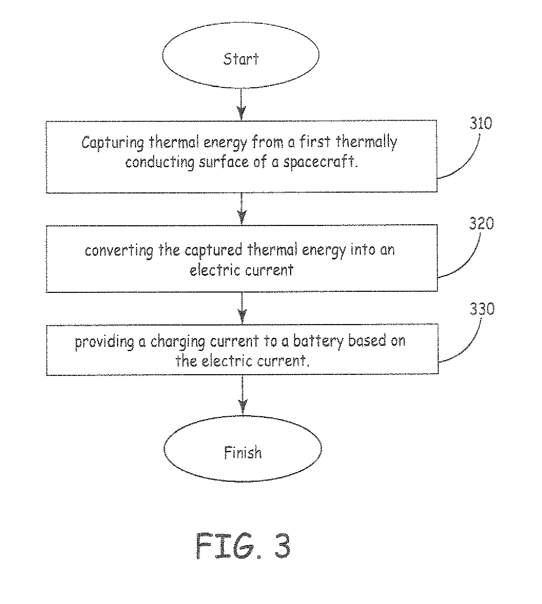

Figure 3 is a flow chart illustrating a method of one embodiment of the present invention for generating electric power aboard a spacecraft. The method begins at 310 with capturing thermal energy from a first thermally conducting surface of a spacecraft. In one embodiment, the first thermally conducting surface has a lower view factor than a second thermally conducting surface of the spacecraft. As discussed above a thermally conducting surface will have a view factor that describes the surfaces efficiency for dissipating thermal energy from the spacecraft. Obstructing the view of a surface with a relatively high view factor reduces the spacecraft's ability to dissipate heat to a greater extent than a surface with a relatively lower view factor. Capturing thermal energy from a lower view factor surface recaptures thermal energy that was not effectively dissipated by the spacecraft's thermal management system, allowing that thermal energy to be used to generate electric power. The method proceeds to 320 with converting the captured thermal energy into an electric current. In one embodiment, radiated thermal energy is converted into an electric current by a thermocouple device. Thermal to electric energy conversion by other devices are also contemplated as within the scope of embodiments of the present invention. The method proceeds to 330 with providing a charging current to a battery based on the electric current generated at 320. In one embodiment, the electric current from one or more thermal to electric energy conversion devices are summed together and received by a charging circuit that conditions the electric current and outputs a charging current to charge the battery. In one embodiment, conditioning the electric current includes raising the voltage of the charging circuit output to a voltage higher than the operating voltage of the battery.

Although the above embodiments illustrate capturing of thermal energy from electronic devices, any device or system onboard the spacecraft which dissipates thermal energy could be a source for capturing thermal energy. Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method for generating electric power, the method comprising:
capturing thermal energy from a first thermally conducting surface of a spacecraft (140, 220, 212, 214);
converting the captured thermal energy into an electric current (142, 226, 236, 237); and
providing a charging current to a battery (144) based on the electric current.

2. The method of claim 1, wherein the first thermally conducting surface of the spacecraft (222, 150) has a lower view factor than a second thermally conducting surface of the spacecraft (222, 150).

3. The method of claim 1, wherein capturing thermal energy from the first thermally conducting surface (222, 150) further comprises capturing thermal energy radiated (224) from the first thermally conducting surface (222).

4. The method of claim 1, wherein capturing thermal energy from the first thermally conducting surface (222, 150) further comprises conductively receiving thermal energy (212, 214) from the first thermally conducting surface (222, 150).

5. The method of claim 1, wherein converting the captured thermal energy into an electric current further comprises applying the captured thermal energy to at least one thermocouple (226, 236, 237) and outputting a current produced by the thermocouple (226, 236, 237).

6. The method of claim 1, wherein providing a charging current to a battery (144) based on the electric current further comprises combining a current output (230) of one or more thermocouples (226, 236, 237).

7. The method of claim 1, wherein providing a charging current to a battery (144) based on the electric current further comprises generating a voltage having a greater voltage than the battery (144).

8. The method of claim 1, wherein one or both of the first thermally conducting surface (152, 222, 150) and the second thermally conducting surface (152, 222, 150) include one or more of an external surface of the spacecraft, a thermal cold plate, and an electronics chassis housing one or more electronic devices.
